# EUROPEAN PATENT APPLICATION

(11) **EP 4 822 657 A1**
(43) Date of publication of application: **14.10.2026**
(21) Application number: 25170147.0
(22) Date of filing: 11.04.2025
(51) Int. Cl.: G06V 20/56, G08G 1/00

(54) **A METHOD FOR OPERATING AN ASSISTANCE SYSTEM OF A MOTOR VEHICLE, A DESIGN FOR A HUMAN EYE NOT FROM SURROUNDINGS DISTINGUISHABLE MARKING, A CORRESPONDING COMPUTER PROGRAM PRODUCT, A CORRESPONDING COMPUTER-READABLE STORAGE MEDIUM, AS WELL AS A CORRESPONDING ASSISTANCE SYSTEM**

(71) Applicant: Valeo Comfort and Driving Assistance, 94000 Créteil (FR); Colas SA, 75015 Paris (FR)
(72) Inventor: GOUGEON, Philippe, 94000 Creteil (FR); TAY-GUYOT, Sarab, 94000 Creteil (FR); ZYOUDI, Bilel, 94000 Creteil (FR); GRANA, Eftychia, 75015 Paris (FR); DURIVAULT-REYMOND, Laurence, 75015 Paris (FR)
(74) Representative: Hofstetter, Schurack & Partner

(57) **Abstract**

The invention relates to a design for a human eye not from surroundings distinguishable marking (9) which can be active or passive and can interact with the automated vehicle through the sensors and the method described. Furthermore, a method for operating an assistance system (2) of a motor vehicle (1), comprising: capturing surroundings (7) of the motor vehicle (1) by a first optical capturing device (3) of the assistance system (2); receiving an information (10) about a presence for a for a human eye not from surroundings distinguishable marking (9) in the surroundings (7) depending on the surroundings (7) by an electronic computing device (5) of the assistance system (2); starting capturing the surroundings (7) with a further capturing device (4) for capturing the for a human eye not from surroundings distinguishable marking (9) depending on the received information (10); extracting an information for the operation of the assistance system (2) from the captured for a human eye not from surroundings distinguishable marking (9) by the electronic computing device (5); and generating a control signal (11) for a functional device (6) of the assistance system (2) depending on the extracted information by the electronic computing device (5). Furthermore, the present invention relates to a computer program product, a computer-readable storage medium, as well as to an assistance system (2).

## Description

The present invention relates to a method for operating an assistance system of a motor vehicle according to the pending claim 1. Furthermore, the present invention relates to a design for a human eye not from surroundings distinguishable marking, a corresponding computer program product, a corresponding computer-readable storage medium, as well as to a corresponding assistance system.

Automatic driving, also known as self-driving or autonomous driving, is a technology that enables motor vehicles to operate without human input. The motor vehicles use sensors, cameras and artificial intelligence to navigate the roads, perceive its environment, make decisions and avoid obstacles.

Markings and road markings in particular are an essential component of automatic driving systems. They provide critical information to the vehicle sensors and artificial intelligence about the road layout, lane boundaries, traffic signs, and other relevant features. Accurate and well-maintained road marking help automated vehicles to navigate safely and efficiently under all weather conditions.

There are several types of classic markings that are particularly important for automatic driving systems. Lane road markings delineate the boundaries of each lane on the road, providing critical information about the vehicle's position within its lane. Automatic driving systems use cameras and sensors to detect lane markings and adjust the vehicle's speed, steering and braking accordingly. Edge lines indicate the outer boundary of the road, helping automated vehicles to stay on the road and avoid wearing off onto the shoulder or into incoming traffic crosswalks markings provide a safe area for pedestrians to cross the street. Automatic driving systems must be able to detect crosswalks and yield to pedestrians, even in complex urban environments. Automated motor vehicles must be able to recognize and respond to traffic signals and signs including stop signs, yield signs, speed limit signs, and traffic lights. Furthermore road lines can be continuous or discontinuous depending on whether or not they can be exceeded. The whiteness of road markings makes them visible during the day (in contrast to the support that is the road) and the addition of glass beads sprinkled on the road markings act as reflectors of the light from a vehicle's headlights, which is appreciated for visibility at night.

To ensure the safe and effective use of automatic driving systems, it is essential that markings are maintained in good condition and are visible during day and night in all weather conditions. The road markings applied are subject to a European certification process which attests to their good performance, particularly in terms of daytime visibility (luminance coefficient), nighttime visibility (retroreflection coefficient) and anti-skid. This requires regular inspection and maintenance by highway authorities and road operators. In addition, there may be a need for new types of markings or signage, visible or not by human eyes that are specifically designed for automated vehicles, such as dedicated lanes or signal systems that communicate directly with the motor vehicle's artificial intelligence. In certain conditions (bad weather, fog, etc.), conventional road markings are not well visible to human eyes or RGB camera. Furthermore, in the environment there already lots of markings, so overloading the environment with markings needs to be prevented. Design of a specific marking product for IR or lidar detection may be a need for automated vehicles.

Overall, the development of automated driving technologies closely links to advancement in marking and signage technology. As automated driving becomes more widespread, it is likely that there will be increased investment in developing more advanced in intelligent markings (road, signage or other infrastructures) systems.

However, a plurality of markings in surroundings of the motor vehicle may produce an abundance and distractions on the roadway. Conventional road markings can be visually overwhelming, especially in complex urban environments with multiple lanes, crosswalks, and other traffic features.

CN 116695605 discloses a road surface invisible mark serving Al driving. The road surface invisible mark comprises a plurality of lane marking blocks which are located under an upper surface layer of a road and coated on the surface of a middle surface layer or a surface of a lower surface layer. The lane marking block prepared by doping a bonding material and an identification material, and the particle size of the identification material is matched with the pavement aggregate; a recognition device is installed on the Al driving vehicle and used for detecting the shapes and sizes of recognition materials in the multiple lane marking blocks, analyzing the types of the recognized lane marking blocks, generating a real-time image map with the cross-section being two-dimensional or three-dimensional, analyzing the real-time image map to obtain indication information of a current road surface, and displaying the indication information of the current road surface according to the indication information of the current road surface. A vehicle position information is obtained through triangular operation. Further, the identification device adopts a vehicle radar.

US 2022/0282436 A1 discloses methods and systems for enhancing road markings using Infrared (IR) retroreflective spherical elements, comprising immersing a plurality of IR retroreflective spherical elements in one or more paint materials to produce a composition applied to paint road markings on one or more surfaces of one or more road segments. Each of the plurality of IR retroreflective spherical elements is at least partially transparent in visible light spectral range and in one or more infrared spectral ranges and is at least partially coated with one or more IR reflective materials characterized by reflecting more than a first value of light in the one or more infrared spectral ranges, and transferring more than a second value of light in the visible light spectral range. The painted road markings expressing driving information relating to one or more road segments.

CN 116403178 A discloses a road invisible sign marking system based on Al driving and an identification method, and the system comprises an invisible road sign marking line which is buried below a road surface layer and is used for bearing a sign marking line for signal identification; the signal identification module is used for identifying invisible road signs and marked lines below a road surface layer and sending invisible road sign and marked line signals to the signal processing module; the signal processing module is used for receiving and translating the signals of the invisible road signs and marked lines to obtain geometric parameters and distance parameters of the invisible road signs and marked lines, and transmitting the translated data to the image processing module; and the image processing module is used for receiving and post-processing the geometric parameters and the distance parameters of the translated invisible marked line, and displaying the geometric parameters and the distance parameters as visual images. According to the invention, a novel marking line which is obviously different from an existing traffic sign marking line is developed in principle, and a traffic sign marking line identification technology which is completely different from vehicle-mounted real-time transmission image identification is developed in the field of automatic driving.

WO 2017/151594 A1 discloses a cooperative guidance system and method based on intelligent materials. For example, an intelligent paint material include a coating that absorbs light while converting the absorbed light to electromagnetic energy. This electromagnetic energy is read by sensors to recognize the materials.

EP2984141 A1 discloses novel road markings for assisting their perception of the surroundings of vehicles. This invention relates more particularly to road markings which, based on established systems, are equipped with additional reflection capacity for electromagnetic radiation, more particular for microwaves and/or infrared radiation.

It is an object of the present invention to provide a method, in particular also a design of a for a human eye not from surroundings distinguishable marking product (specific marking passive or active), a corresponding computer program product, a corresponding computer-readable storage medium, as well as a corresponding assistance system, by which a more efficient operation of the assistance system can be provided.

This object is solved by a method, in particular also a design of a new for a human eye not from surroundings distinguishable marking product (specific marking passive or active, road or other infrastructure), a corresponding computer program product, a corresponding computer-readable storage medium, as well as a corresponding assistance system according to the independent claims. Advantageous embodiments are presented in the dependent claims.

A first aspect of the invention relates to a method for operating an assistance system of a motor vehicle. Surroundings of the motor vehicle are captured by a first optical capturing device of the assistance system. An information about a presence for a for a human eye not from surroundings distinguishable marking in the surroundings is received depending on the captured surroundings by an electronic computing device of the assistance system. Capturing the surroundings with a further capturing device for capturing the for a human eye not from surroundings distinguishable marking is started depending on the received information. In particular, then the for a human eye not from surroundings distinguishable marking is captured by a further capturing device. An information for the operation of the assistance system is extracted from the captured for a human eye not from surroundings distinguishable marking by the electronic computing device, and a control signal for a functional device of the assistance system is generated depending on the extracted information by the electronic computing device.

For example, the control signal can be transmitted to a functional device for steering and/or acceleration or braking the motor vehicle. Therefore, it is possible that the further capturing device captures specific non-distinguished markings in the surroundings. Therefore, this can help to reduce clutter and distraction on the roadway. Conventional road markings can be visually overwhelming, especially in complex urban environment with multiple lanes, cross-walks and other traffic features. By using non-distinguishable markings in certain areas, highway authorities and road operators can create a cleaner and more minimalistic visual environment that is less distracting to both human drivers and automatic driving systems.

Another potential benefit of for a human eye not from surroundings distinguishable specific marking (noted as specific marking form now on) is that they can be used to test and validate the performance of automated driving systems in challenging or ambitious situations. For example, highway authorities could use hidden or invisible markings on a test track or closed cause to evaluate how well an automated vehicle can detect and respond to the absence of lane markings or other visual cues. This type of testing can help to identify weaknesses or limitations in the vehicle's artificial intelligence and sensor systems, allowing developers to improve performance and safety.

Specific markings, invisible or not, could also be used in conjunction with advanced sensing technologies, such as lidar or radar, to create a more robust and redundant system for navigating complex environments. By combining multiple sensors and data sources, automatic driving systems can create a more accurate and detailed picture of the roadway in its surroundings, allowing them to operate more safely and efficiently in challenging conditions.

In particular, in order to enhance the dispositions about the for a human eye not from surroundings distinguishable markings and signs, cameras, lidars or also hybrid versions can be used, and different specific markings can be developed. In particular, the invisible (non-distinguished from the environment) feature is applicable for the light spectrum detected by the human eye. Of course, for the purpose of the invention, one or several sensors implemented on the assistance system may be able to detect the markings.

One further aspect of the invention, which can also be seen as an independent aspect of the invention, relates to a new specific marking system, active or passive, which can be invisible to the human eyes or not but not distinguishable from the surroundings. This system can be used for the first aspect of this invention. New specific marking system combine or not two parts: a paint specifically formulated to contain different pigments and fillers as Infrared (IR) reflective elements and other specific elements that can be sprinkled on the surface of the paint (by sprinkling during application, the elements are embedded on the surface of the paint while the paint dries). These embedded elements can be beads or grains (different sizes, in mix or not) such as glass beads (different refractive index) or abrasive grains (silica, corundum or bauxite).

In particular, these embedded elements can impact the surface texture of the marking system, which can be detected by lidar detection systems.

This specific marking has been formulated to resist constraints as it is used as, for example, road marking which can resist to traffic and weather conditions. Additionally, the marking is formulated to be non-detectable for a specific detection system, in particular the capturing device, but detectable by another, for example, the further capturing device. For example, specific marking, for a human eye not from surroundings distinguishable, so as the infrastructure users are not disturbed by, or an RGB camera by, for example, being translucent or with chromatic coordinates similar to the infrastructure (road, signs, etc) construction material making it "invisible". Perception/detection by lidar and/or Al detector is due to its specific texture by using drop-on-aggregate such as glass beads or anti-skid materials or specific pigments. In particular, the marking may be not detectable in the visible range because it has the same aesthetic characteristics (colour, gloss, etc.) as the substrate on which it is applied.

The specific by design marking is in particular made "invisible" by at least one of two specific properties of the formulation design. For example, firstly, the marking solution can be translucid in the visible spectrum. Secondly, wherein its implementation of this marking is on a material of the surface, for example, ground or wall or other infrastructure (safety barrier, road sign...), of the same shade of the color, in particular so-called tone-on-tone. In particular, not distinguished from the environment by the human eye passive marking is formulated to absorb light in visible spectral ranges and to reflect light in one or more infrared spectral ranges, which can be detected by different type of IR detection system, as in particular in NIR range.

In a similar way, an active marking system can include or not LEDs that emit at the IR spectrum. The LEDs can be chosen according to the sensor specifications (in particular in the NIR range).

For the assistance system, the differentiation between regular markings and specific; for a human eye not from surroundings distinguishable marking, invisible or not, is performed according to the four rules mentioned below. These rules are based on real testing made on a test track, and validated with real road marking prototypes and real prototype automotive cameras. A first rule is little contrast for human eye. A second rule is little contrast (close to 0) in the visible (spectrum) Grayscale. A third rule is positive contrast in NIR (near infra red) and a fourth rule is difference between NIR and VIS contrast is greater than zero. The specific markings can be applied on the road surface or on other infrastructure with the assistance system detection range, for example, on traffic signs, walls, buildings, posts or furthermore. The specific markings are not distinguished from surroundings for human drivers. A backup mode or a fall back is easier to execute by the automated vehicle than digital map tracking in case of sensor or the assistance system's failure. Moderate or even low computational capability is required to detect the specific markings. This means that it is possible to have a commercial backup calculator such as FPGA, ASIC or microprocessor, for example. Therefore, moderate overall system costs for the automated/equipped motor vehicle can be provided as existing sensors can be reused. The marking solution has reasonable effort, the identification means are identical to those for standard road markings, same width of standard lane markings, for example 15 cm, and reduced cost of design thanks to standard size of some patterns.

According to an embodiment, an at least in part automated guiding of the motor vehicle is performed depending on the for a human eye not from surroundings distinguishable marking. For example, the specifically designed marking may lead the at least in part automated motor vehicle to a special infrastructure, for example parking lot or a loading point. Therefore, the electronic computing device can extract the information on the specific marking and present it on a display device in order to show the driver of the motor vehicle/operator of the motor vehicle where the infrastructure is. Furthermore, an at least in part automatic driving to the infrastructure can be provided depending on the for a human eye not from surroundings distinguishable marking.

In another embodiment, additionally depending on the status of the assistance system a minimum risk maneuver is performed depending on the captured for the specific, for a human eye not from surroundings distinguishable, marking. For example, the specific marking can be used to overcome visible sensor failure. Indeed, the aim is to bring, for example, a so-called L3, L4 or L5 road vehicle to a safety shelter in case of loss of perception information from visible sensors and control functions, without the possibility of the driver or the assistance system to take back control of the motor vehicle. Therefore, also a minimum risk maneuver can be performed by using the for a human eye not from surroundings distinguishable road marking as a guide.

In another embodiment, in case of a failure of the first capturing device the further capturing device is used for guiding the motor vehicle. Therefore, in particular in specific areas, for example in parking lots or in cities, when the failure of the capturing device is received, the motor vehicle can be guided depending on the non-visible markings. Therefore, safe driving of the motor vehicle can be realized.

In another embodiment, the further capturing device is provided as an infrared camera and/or a lidar. In particular, infrared cameras, lidar (light detection and ranging) and near-infrared (NIR) are remote sense technologies that are used for different applications in various fields such as automotive, robotics, surveillance, agriculture, and defense. Infrared cameras capture images in the infrared spectrum, which is beyond human vision. They use specialized sensors that detect heat signature or electromagnetic radiation in the infrared range to create thermal images of objects and scenes. Infrared cameras are used for various applications such as night vision, security surveillance, building diagnostics, and industrial inspections. The lidar technology uses laser light to measure distances and detect objects in a 3D-space. A lidar sensor emits a pulse of laser light and measures the time it takes for the light to bounce back after hitting an object. By repeating this process many times per second, a lidar can create a detailed 3D point cloud of the environment, which can be used for applications such as autonomous vehicles, mapping, surveying, and robotics. NIR is a type of infrared radiation but has longer wavelengths than visible light but shorter wavelengths than far-infrared radiation. NIR sensors are used for applications such as machine vision, agriculture monitoring, and remote sensing. They can penetrate through haze, fog, and smoke, making them useful for applications where visibility is limited. In particular, in the context of automated driving, infrared cameras, lidar, and NIR are important sensors that are used to detect and interpret the vehicles' environment. In particular, lidars are often used as a primary sensor for autonomous vehicles due to its ability to create highly accurate 3D point clouds of the environment. However, infrared cameras and NIR sensors can also provide valuable information about the roadway and its surroundings, especially in low-visibility conditions or where visual cues are limited. By combining multiple sensing technologies, automatic driving systems can create a more robust and redundant system for navigating complex environments.

In another embodiment, depending on a current position of the motor vehicle and/or from surroundings for the at least first capturing device distinguishable captured marking by the first capturing device the information for the presence for a for a human eye not from surroundings distinguishable marking is received. For example, in a navigation map the position of the for a human eye not from surroundings distinguishable marking is provided.

Depending on the current position and the current map, the assistance system gets the information that it is in the receiving distance of the further capturing device for capturing the for a human eye not from surroundings distinguishable marking, in particular of the presence of such a marking. Therefore, the further capturing device can start capturing the surroundings in order to search for specific markings. Therefore, just when the information about the presence is present, the further capturing device starts searching for the marking. Furthermore, for example when the motor vehicle drives into an area where at least one for a human eye not from surroundings distinguishable marking is receivable, the further capturing device can be started in order to search for the for a human eye not from surroundings distinguishable marking.

In another embodiment, the for a human eye non-visible marking is captured on a road the motor vehicle is travelling on and/or on a vertical object in the surroundings. Therefore, the for a human eye not from surroundings distinguishable marking can be, for example, a so-called road marking or can be provided at walls or further traffic signs and infrastructure. Therefore, the different surroundings can be used in order to provide the for a human eye not from surroundings distinguishable marking. Therefore, a plurality of different markings can be provided in order to provide different information for the assistance system.

In another embodiment, a cryptographic marking as the for a human eye not from surroundings distinguishable marking is captured. For example, the cryptographic marking can be a code, for example a QR code. Therefore, different information can be inside of the QR code, wherein a plurality of information can be provided for the assistance system. Therefore, not just only guiding information, but also further information can be provided with a cryptographic marking. Therefore, with just one marking a high information density can be provided.

In another embodiment, the for a human eye not from surroundings distinguishable marking is used for localizing the motor vehicle relative to the surroundings. For example, if the motor vehicle may drive through a tunnel, a localization of the motor vehicle via, for example, GPS is not possible. The motor vehicle may determine the presence of the specific marking before entering the tunnel. Inside the tunnel, the specific markings can be used in order to localize the motor vehicle inside of the tunnel. Therefore, a localization inside a place with, for example no GPS, can be performed.

In another embodiment, depending on the extracted information a calibration of at least one sensor of the assistance system is performed. For example, a so-called sensor online calibration can be used by a specific marking or a QR code with the specific marking. Sensor calibration is an essential process in the development and operation of automatic driving systems. The accuracy and reliability of sensors such as cameras, lidar, radar and ultrasonic sensors are critical for safe and efficient autonomous driving. Calibrating these sensors ensures that they measure and interpret the vehicle's environment accurately and consistently over time. During driving, sensor calibration is crucial for maintaining the performance of automatic driving systems. As the motor vehicle moves through different environments and lighting conditions, sensors can become misaligned or degraded, leading to inaccurate measurements and potential safety risks. Regular sensor calibration helps to ensure that the sensors are functioning correctly and providing accurate data to the vehicle's artificial intelligence and control systems. As the motor vehicle moves through different environments, sensor data is continuously monitored and analyzed to detect any changes or degradation in performance. This can include checking for inconsistencies in sensor readings, adjusting the sensor parameters, or recalibrating sensors using external references such as GPS or landmarks. Furthermore, sensors are continuously monitored during driving to ensure that they are functioning within their specified limits. If a sensor fails or becomes degraded, the vehicle's artificial intelligence can take corrected action or alert the driver or operator. Proper sensor calibration is critical for ensuring the safe and reliable operation of automatic driving systems. By maintaining accurate and consistent sensor readings, automatic driving systems can make better decisions, avoid obstacles, and navigate complex environments with greater confidence. As a result, sensor calibration is an essential process that must be performed regularly and rigorously to ensure the safe and efficient deployment of autonomous motor vehicles.

In another embodiment, the electronic computing device is configured for generating an activation signal for activating an operation of the for a human eye not from surroundings distinguishable marking. For example, the specific for a human eye not from surroundings distinguishable marking can be active with LEDs, which are not visible for the human eye and that emit in the IR range. When the motor vehicle is in the area of the specific marking, the electronic computing device can generate a starting signal in order to activate the LEDs of the specific marking. Therefore, just with the presence of the motor vehicle, the specific markings are activated.

In another embodiment, the for a human eye not from surroundings distinguishable marking is captured in a wavelength area higher than 700nm. Therefore, the markings are just receivable in the infrared area. Therefore, the for a human eye not from surroundings distinguishable marking is just perceptible for the further capturing device and not, for example, the human eye as well as the capturing device.

In another embodiment, the design of a for a human eye not from surroundings distinguishable specific marking product with specific surface texture is detected by lidar camera.

Another embodiment relates to that the for a human eye not from surroundings distinguishable marking is provided as a passive marking or an active marking. The passive marking may be for example a paint and/or other marking (road, signage or other infrastructure). The active road marking may be for example an embedded LED system on road or other infrastructure.

Furthermore, another embodiment is that the for a human eye not from surroundings distinguishable marking is provided with a specific surface texture to be captured by a lidar sensor as the further capturing device and/or with specific infrared reflection elements to be captured by an infrared camera as the further capturing device and/or with a translucid color and/or with a present colorimetry of the infrastructure substrate. The surface texture can be provided by for example beads or grains or other objects or patterns induced by the application process. The infrared reflection elements can be provided by for example pigments or fillers for passive marking or embedded IR LEDs for active marking.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to an assistance system for a motor vehicle, comprising at least one first capturing device, one further capturing device, and one electronic computing device, wherein the assistance system is configured for performing a method according to the preceding aspect. In particular, the method is performed by the assistance system.

Furthermore, the present invention relates to a motor vehicle comprising at least the assistance system according to the preceding aspect. In particular, the motor vehicle is at least an in part automated motor vehicle or a fully automated motor vehicle.

Advantageous embodiments of the method are regarded as advantageous embodiments of the computer program product, the computer-readable storage medium, the assistance system, as well as the motor vehicle. Therefore, the assistance system as well as the motor vehicle comprises means for performing the method.

In the present disclosure, a computing unit/electronic computing device can for example be understood as a data processing device with processing circuits. Thus, a computing unit can perform computing operations to process data. The computing operations can also include indexed accesses to a data structure, for example a look-up table, LUT.

Within the scope of the present disclosure, an object recognition algorithm can be understood as a computer algorithm, which is capable of identifying and localizing one or more objects within a provided input dataset, for example input image, for example in that it determines corresponding bounding boxes or regions of interest (ROI) and in particular associates a corresponding object class with each of the bounding boxes, wherein the object classes can be selected from a predefined set of object classes. Therein, the assignment of an object class to a bounding box can be understood such that a corresponding confidence value or a probability that the object identified within the bounding box belongs to the corresponding object class, is provided. For example, the algorithm can provide such a confidence value or a probability for each of the object classes for a given bounding box. The assignment of the object class can for example include the selection or provision of the object class with the greatest confidence value or the greatest probability. Alternatively, the algorithm can also only determine the bounding boxes without associating a corresponding object class. Furthermore, the by the algorithm detected object classes could be represented as dynamic objects in the generated display image as complement to the three dimensional map.

In particular, a computing unit can include one or more computers, one or more microcontrollers and/or one or more integrated circuits, for example one or more application-specific integrated circuits, ASIC, one or more field-programmable gate arrays, FPGA, and/or one or more systems on a chip, SoC. The computing unit can also include one or more processors, for example one or more microprocessors, one or more central processing units, CPU, one or more graphics processing units, GPU, and/or one or more signal processors, in particular one or more digital signal processors, DSP. The computing unit can also include a physical or virtual cluster of computers or others of the mentioned units.

A computing unit can also include one or more hardware and/or software interfaces and/or one or more storage units. Therein, a storage unit can be designed as a volatile data memory, for example as a dynamic random access memory, DRAM, or static random access memory, SRAM, or as a non-volatile data memory, for example as a read-only memory, ROM, as a programmable read-only memory, PROM, as an erasable programmable read-only memory, EPROM, as an electrically erasable programmable read-only memory, EEPROM, as a flash memory or flash EEPROM, as a ferroelectric random access memory, FRAM, as a magnetoresistive random access memory, MRAM, or as a phase-change random access memory, PCRAM.

Advanced Driver-Assistance Systems (ADAS) according to this invention are sophisticated electronic systems designed to enhance vehicle safety and driver convenience. These systems consist of various technical components, including sensors, cameras, radar, lidar, actuators, and control units. Sensors play a crucial role in detecting the environment around the vehicle. They include ultrasonic sensors, cameras, radar, and lidar. Ultrasonic sensors use sound waves to measure distances to nearby objects, while cameras capture images of the road and surrounding area. Radar and lidar use radio or light waves, respectively, to detect objects at longer ranges and with higher precision. ADAS control units/electronic computing device process sensor data and make decisions based on that information. They typically consist of a microcontroller, memory, input/output interfaces, and communication protocols. The control unit receives data from the sensors, processes it using algorithms and machine learning techniques, and then sends commands to the actuators to take appropriate actions. Actuators are devices that convert electrical signals into physical movements or actions. They include electric motors, solenoids, and hydraulic or pneumatic systems. For example, an electric motor can adjust the steering angle, while a solenoid can control the brakes or throttle position. A user interface provides feedback to the driver about the status of the ADAS. It includes visual displays, audible alerts, and haptic feedback. Visual displays show information on dashboard screens, while audible alerts use sounds or voice messages to warn the driver of potential hazards. Haptic feedback can include steering wheel vibrations or seat pulses to alert the driver of danger. ADAS rely on communication protocols to transmit data between components. Common protocols include CAN (Controller Area Network), LIN (Local Interconnect Network), and Ethernet. These protocols allow different components to communicate with each other, ensuring that the ADAS functions as intended. Modern ADAS use machine learning algorithms to improve their performance over time. These algorithms analyze sensor data and learn from it, allowing the system to adapt to changing conditions and improve its accuracy. In summary, an ADAS consists of various technical components, including sensors, control units, actuators, user interfaces, communication protocols, and machine learning algorithms. By combining these elements, ADAS can help improve vehicle safety, reduce accidents, and enhance the driving experience.

For application cases or application situations, which can arise in a method according to the invention and which are not explicitly described herein, it can be provided that an error message and/or a request for inputting a user feedback are output and/or a default setting and/or a predetermined initial state are adjusted according to the method.

Further features of the invention are apparent from the claims, the figures and the description of figures. The features and feature combinations mentioned above in the description as well as the features and feature combinations mentioned below in the description of figures and/or shown in the figures can be encompassed by the invention not only in the respectively specified combination, but also in other combinations. In particular, implementations and feature combinations can also be encompassed by the invention, which do not comprise all of the features of an originally formulated claim. Moreover, implementations and feature combinations can be encompassed by the invention, which extend beyond or deviate from the feature combinations set forth in the relations of the claims.

Therefore, the figures show in:
- Fig. 1: a schematic top view according to an embodiment of a motor vehicle comprising an embodiment of an assistance system; and
- Fig. 2: a schematic perspective view according to an embodiment of the motor vehicle within an embodiment of the assistance system.

In the figures, the same elements are comprising the same reference signs.

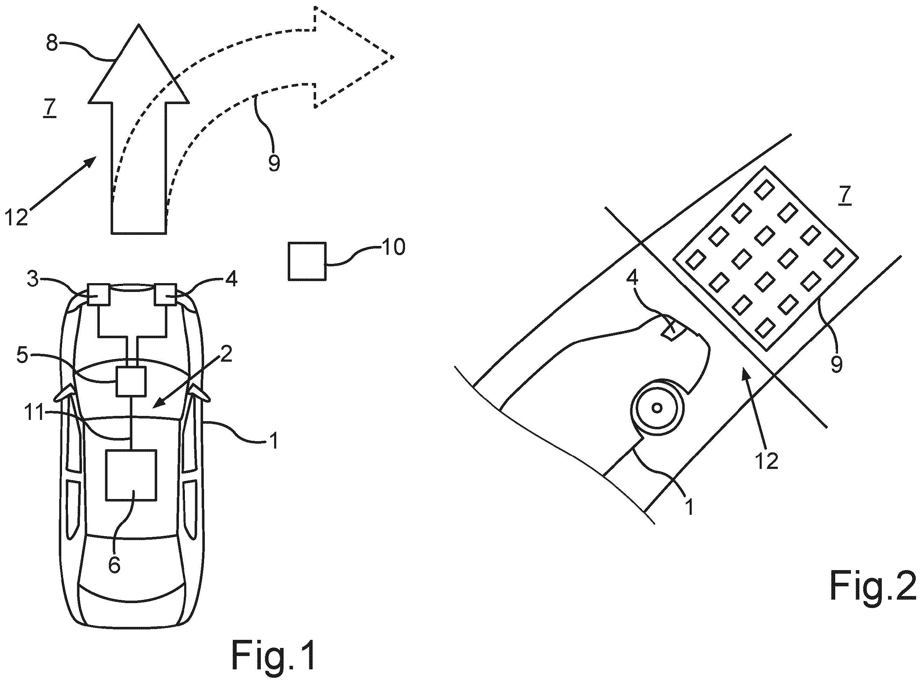

Fig. 1 shows a schematic top view according to an embodiment of a motor vehicle 1. The motor vehicle 1 is in particular at least in part automated or fully automated. The motor vehicle 1 comprises an assistance system 2. The assistance system 2 according to the shown embodiment comprises at least a capturing device 3, a further capturing device 4, one electronic computing device 5 and one functional device 6. The functional device 6 is, for example, a steering or accelerating/decelerating device of the motor vehicle 1.

The capturing device 3 can, for example, capture surroundings 7 of the motor vehicle 1 in a visible area. Under visible area it is in particular to be understood that it is visible for a human eye and/or, for example, for a normal RGB camera as the capturing device 3.

Fig. 1 further shows that a visible road sign 8 on a road 12 the motor vehicle 1 is travelling on. Furthermore, a for a human eye not from surroundings distinguishable marking 9 which is perceptible for the further capturing device 4.

Therefore, Fig. 1 shows the assistance system 2, which captures the surroundings 7 of the motor vehicle 1 by the optical capturing device 3 of the assistance system 2. An information 10 about the presence for the for a human eye not from surroundings distinguishable marking 9 in the surroundings 7 is received depending on the captured surrounding 7 by the electronic computing device 5. A capturing of the surroundings 7 with the further capturing device 4 for capturing the for a human eye not from surroundings distinguishable marking 9 is started depending on the received information 10. An information for the operation of the assistance system 2 is extracted from the for a human eye not from surroundings distinguishable marking 9 by the electronic computing device 5. A control signal 11 for the functional device 6 of the assistance system 2 is generated depending on the extracted information by the electronic computing device 5.

In particular, an at least in part automatic guiding of the motor vehicle 1 is performed depending on the for a human eye not from surroundings distinguishable marking 9. Furthermore, additionally, depending on a status of the assistance system 2 a minimum risk maneuver is performed depending on the for a human eye not from surroundings distinguishable marking 9. In particular, in case of a failure of the capturing device 3, the further capturing device 4 is used for guiding the motor vehicle 1.

The further capturing device 4 may be provided as an infrared camera and/or a lidar. Therefore, in particular, the for a human eye not from surroundings distinguishable marking 9 is captured in a wavelength area higher than 700nm.

Furthermore, depending on a current position of the motor vehicle 1 and/or a from surroundings for the at least first capturing device 3 distinguishable captured marking captured marking by the capturing device 3 the information 10 for the presence for for a human eye not from surroundings distinguishable marking 9 is received.

As shown in Fig. 1, the for a human eye not from surroundings distinguishable marking 9 may be captured on a road 12 the motor vehicle 1 is travelling on and/or on a vertical object in the surroundings 7.

Fig. 2 shows a schematic perspective view according to an embodiment of the motor vehicle 1. In particular, Fig. 2 shows that, for example, a cryptographic marking as the for a human eye not from surroundings distinguishable marking 9 is captured. For example, a QR code can be provided as the for a human eye not from surroundings distinguishable marking 9. Furthermore, the for a human eye not from surroundings distinguishable marking 9 can be used for localizing the motor vehicle 1 relative to the surroundings 7.

Furthermore, depending on the extracted information, a calibration of at least one sensor, for example the capturing device 3 and/or the further capturing device 4, of the assistance system 2 can be performed.

Furthermore, the electronic computing device 5 is configured for generating an activation signal for operating an operation of the for a human eye not from surroundings distinguishable marking 9.

Therefore, in order to enhance the depositions about markings and signs, the possibility to detect "invisible" (for a human eye not from surroundings distinguishable) markings is presented in this invention and different specific markings can be developed, therefore. The invisible feature is for example invisible for the light spectrum detected by the human eye. Of course, for the purpose of the invention, one or several sensors implemented on the assistance system 2 can be able to detect the markings.

The detection is multipurpose and could be used for automatic driving function or in new value spaces with robotized vehicles like charging stations, airports, freight, and logistics, parking lots for shuttles and robotaxis. Furthermore, following of way points painted on the surface or on other elements of the infrastructure, aiming and providing guidance to the assistance system 2 can be provided. Furthermore, a restricted zone delimitation or highly critical zone management such as tunnels, bridges, and merging lanes on highways can be performed. Sensor online calibration may also be performed by using a specific marking or, for example, a QR code. The detection of subluminal text messages and the relocalization by using specific marking or a QR code can also be performed. As an example, this concept can be used by the specific marking to overcome vehicle sensor failure. Indeed, the aim is to bring an L3, L4, L5 road vehicle to a safety shelter in the case of loss of perception information from vehicle sensors and control functions, without the possibility of the driver taking or the assistance system 2 to take back control of the motor vehicle 1.

For example, the motor vehicle 1 is travelling on the road 12 in a given geometric area, which provides the for a human eye not from surroundings distinguishable marking 9. The motor vehicle 1 is equipped with several types of sensors including cameras a lidars. The assistance system 2 is working in a nominal mode.

Then, an incident occurs and leads to a total loss of data coming from the embedded cameras. This leads to a deterioration of the assistance system 2 capabilities with the standard sensor set. The motor vehicle 1 supervisor detects this data loss. Based on the type of incident, the auxiliary system may be activated. This auxiliary system is based on the perception of a dedicated horizontal road marking, in particular the invisible marking system, part of the surrounding environment, yet not possible to detect neither for the human eye nor for the vehicle cameras. However, the perception of this line is possible with, for example, infrared sensors, in particular sensitive to light in the NIR, SWIR, and MWIR spectrums. Therefore, the assistance system 2 is back in operation but in limited way. A detection algorithm running on a separate calculator may now allow the motor vehicle 1 to be positioned in front of this line in the same direction of the arrow or chevrons. The motor vehicle 1 may then follow this guideline that acts as an Ariane thread to park in a dedicated shelter space. The shelters limits are indicated/materialized within "invisible" lines of for a human eye not from surroundings distinguishable marking. The "invisible" line along with the chevron occupy, in this example, the central position of the safety track. The safety track could be the emergency lane, or a designated lane in the traffic lanes, for example, the right one or slowest track, for instance.

## Claims

1. A method for operating an assistance system (2) of a motor vehicle (1), comprising:
- capturing surroundings (7) of the motor vehicle (1) by a first optical capturing device (3) of the assistance system (2);
- receiving an information (10) about a presence for a for a human eye not from surroundings distinguishable marking (9) in the surroundings (7) depending on the surroundings (7) by an electronic computing device (5) of the assistance system (2);
- starting capturing the surroundings (7) with a further capturing device (4) for capturing the for a human eye not from surroundings distinguishable marking (9) depending on the received information (10);
- extracting an information for the operation of the assistance system (2) from the captured for a human eye not from surroundings distinguishable marking (9) by the electronic computing device (5); and
- generating a control signal (11) for a functional device (6) of the assistance system (2) depending on the extracted information by the electronic computing device (5).

2. The method according to claim 1,
**characterized in that**
an at least in part automated guiding of the motor vehicle (1) is performed depending on the for a human eye not from surroundings distinguishable marking (9).

3. The method according to claim 1 or 2,
**characterized in that**
additionally, depending on a status of the assistance system (2), a minimum risk maneuver is performed by the motor vehicle (1) depending on the for a human eye not from surroundings distinguishable marking (9).

4. The method according to claim 3,
**characterized in that**
in case of a failure of the first capturing device (3), the further capturing device (4) is used for guiding the motor vehicle (1).

5. The method according to any one of claim 1 to 4,
**characterized in that**
the further capturing device (4) is provided as an infrared camera and/or a lidar.

6. The method according to any one of claim 1 to 5,
**characterized in that**
depending on a current position of the motor vehicle (1) and/or a from surroundings for the at least first capturing device (3) distinguishable captured marking (8) by the first capturing device (3), the information (10) for the presence of for a human eye not from surroundings distinguishable marking (9) is received.

7. The method according to any one of claim 1 to 6,
**characterized in that**
the for a human eye not from surroundings distinguishable marking (9) is captured on a (12) the motor vehicle (1) is travelling on and/or on a vertical object in the surroundings (7).

8. The method according to any one of claim 1 to 7,
**characterized in that**
a cryptographic marking as the for a human eye not from surroundings distinguishable marking (9) is captured.

9. The method according to any one of claim 1 to 8,
**characterized in that**
the for a human eye not from surroundings distinguishable marking (9) is used for localizing the motor vehicle (1) relative to the surroundings (7).

10. The method according to any one of claim 1 to 9,
**characterized in that**
depending on the extracted information, a calibration of at least one sensor of the assistance system (2) is performed.

11. The method according to any one of claim 1 to 10,
**characterized in that**
the electronic computing device (5) is configured for generating an activation signal for activating an operation of the for a human eye not from surroundings distinguishable marking (9).

12. The method according to any one of claim 1 to 11,
**characterized in that**
the for a human eye not from surroundings distinguishable marking (9) is captured in a wavelength area higher than 700nm.

13. The method according to any one of claims 1 to 12,
**characterized in that**
the for a human eye not from surroundings distinguishable marking (9) is provided as an passive marking or an active marking.

14. The method according to any one of claims 1 to 13,
**characterized in that**
the for a human eye not from surroundings distinguishable marking (9) is provided with a specific surface texture to be captured by a lidar sensor as the further capturing device (4).

15. The method according to any one of claims 1 to 14,
**characterized in that**
the for a human eye not from the for a human eye not from surroundings distinguishable marking (9) is provided with specific infrared reflection elements to be captured by an infrared camera as the further capturing device (4).

16. The method according to any one of claims 1 to 15,
**characterized in that**
the for a human eye not from the for a human eye not from surroundings distinguishable marking (9) is provided with a translucid color and/or with a present infrastructure substrate colorimetry.

17. A computer program product comprising program code means for performing a method according to any one of claims 1 to 16.

18. A computer-readable storage medium comprising at least the computer program product according to claim 17.

19. An assistance system (2) for a motor vehicle (1), comprising at least one first capturing device (3), one further capturing device (4), and one electronic computing device (5), wherein the assistance system (2) is configured for performing a method according to any one of claims 1 to 16.
